# EUROPEAN PATENT SPECIFICATION

(11) **EP 1 209 866 B1**
(45) Date of publication and mention of the grant of the patent: **23.01.2008**
(21) Application number: 01127343.0
(22) Date of filing: 20.11.2001
(51) Int. Cl.: H04L 12/58, H04L 12/18

(54) **System and method for managing messages**
System und Verfahren zur Verwaltung von Nachrichten
Système et procédé pour gérer des messages

(30) Priority: 22.11.2000 US 717303; 22.11.2000 US 717278; 22.11.2000 US 717298; 08.12.2000 US 732024; 08.12.2000 US 732028; 08.12.2000 US 732029
(43) Date of publication of application: 29.05.2002
(73) Proprietor: Xerox Corporation, Rochester, New York 14644 (US)
(72) Inventor: Baldonado, Michelle Q., Palo Alto, CA 94303 (US); Chang, Bay-Wei, Foster City, California 94404 (US); Newman, Paula S., Los Altos, CA 94022 (US); Janssen, William C., jr., Mountain View, CA 94043 (US)
(74) Representative: Grünecker, Kinkeldey, Stockmair & Schwanhäusser Anwaltssozietät

(56) References cited:
- WO-A-97/27534
- GB-A- 2 324 627
- US-B1- 6 630 944

## Description

### FIELD OF THE INVENTION

This invention relates to discussion fora, electronic messages, and electronic messaging systems. In particular, this invention relates to systems and methods for managing electronic messages within a discussion forum, manipulating electronic messages based on sender-independent rule-based criteria, and locating and presenting messages that are conversationally related to an electronic message.

### BACKGROUND OF THE INVENTION

Fora provide environments for discussion by a community. In general, forum members supply information, such as, by posting or uploading of electronic messages, to a predetermined location. This information is then available to the remaining forum members for reading, comments, copying, transmission, or the like. Furthermore, a forum allows for subscribers to subscribe to the forum. For example, a subscriber can join a forum and be updated as new information is provided or posted to the forum.

Three common systems for transferring electronic messages are direct e-mail, mailing lists, and bulletin board services. With direct e-mail, a user sends messages to individuals and receives electronic messages from individuals. With a mailing list, upon a user subscribing to a list, which usually corresponds to one or more particular topics of interest, a mailing list manager delivers all the electronic messages posted to the list to the subscribed user. In a bulletin board type environment, a plurality of users can post or upload electronic messages to a common location for others to see, comment on, or the like. Conversationally related messages, or threads, develop as additional electronic messages are added to the bulletin board system. The bulletin board system may contain messages that are conversationally related, plus messages in which users have interjected additional comments that may or may not pertain to the subject matter in the original thread.

Electronic messaging systems, such as an e-mail system or an electronic news system, allow one or more individuals to communicate with one another. In particular, a first individual will specify address information of the recipient(s) and then populate the body of the message with message content. The electronic message is then delivered to the recipient(s) for review. One or more of the recipients can then, for example, reply to the message, forward it to additional individuals, store the message, or the like. Thus, the number of e-mail messages can rapidly grow and conversations on the original topic can continue ad infinitum.

Alternatively, a recipient may not immediately respond to a received e-mail. For example, a recipient may read the e-mail, and then store it with the intention of replying at a later date. Then, at a later date, the recipient may generate a new e-mail back to the original sender. This new e-mail may, for example, include information pertinent to the original e-mail, plus, for example, supplemental conversationally related material. This e-mail is then returned to the original sender with the mutual understanding that a conversation on a particular topic had previously occurred and this e-mail was in response to, or supplemental to, the original e-mail message.
GB 2 324 627 A discloses a system for grouping chat rooms into logical categories and discloses a system that discovers the customs of access to categories of users in a forum and which creates a super-forum following the user's habits.
WO 97/27 534 A discloses a method of navigation that allows a user to achieve quickly their goals in a user interface. An interactive choice menu leads the user in a customized content area depending on his choices.

### SUMMARY OF THE INVENTION

Readers of fora, which, for example, are composed of numerous e-mails or postings, typically have to sort through unwanted messages, for example, by writing filters, deleting messages, or the like. Recognition of the time and cost involved in processing unwanted messages in a forum can affect the actions of the other members in the forum community. Specifically, members of the community, for example content contributors, or posters, who place information, such as electronic messages, within the forum may be hesitant to follow up on a posted topic of interest out of concern over increasing traffic within the forum. Thus, in any large forum, there are likely to be topics of interest to a subgroup that do not get addressed, and a myriad of topics that are only of interest to a small subgroup, but nevertheless are posted for the entire community to review.

The systems and methods of this invention provide a solution to the above. In particular, with the present invention in embodiments thereof an agent monitors the traffic in a computer-mediated discussion or forum. When the agent determines that there is a significant degree of traffic on a particular topic, the agent proposes to the contributors of messages on that topic that a new discussion forum be created. If any of the contributors agrees to the suggestion, a new discussion forum is created by the agent. The agent and the contributors are then automatically subscribed to the new forum, and an invitation to join the new forum can be optionally delivered to all or a portion of the full membership of the original forum, plus any other recipients of postings on the topic.

Aspects of the present invention relate to an information stream monitoring system comprising an information monitoring device that monitors one or more electronic documents in an information stream. The information monitoring device also compares information about the one or more electronic documents to at least one rule. A forum spawning device queries a set of users when at least one of the at least one rules is satisfied, and creates a forum based on one or more replies from the set of users.

Aspects of the present invention also relate to an information stream monitoring method comprising monitoring one or more electronic documents in an information stream. Next, information about the one or more electronic documents is compared to at least one rule. A set of users is then queried when at least one of the at least one rules is satisfied and a new forum created based on one or more replies from the set of users.

Aspects of the present invention also relate to information that monitors one or more electronic documents in an information stream. Including, information that compares information about the one or more electronic documents to at least one rule, information that queries a set of users when at least one of the at least one rules is satisfied; and information that creates a new forum based on replies from the set of users.

Aspects of the present invention also relate to an information monitoring system comprising an information monitoring device for monitoring data associated with electronic documents. The information monitoring device is adapted to compare the data from the electronic documents according to a rule. A forum spawning device queries a set of users when the rule is satisfied, and creates a forum based on a reply from the set of users.

A forum monitoring system and method of this invention uses a combination of rules and tracking to monitor discussions within a forum, and then subsequently suggest and establish a new forum based on demand.

Specifically, the system and method of this invention monitor one or more information streams until satisfaction of one or more rules is obtained. Upon satisfaction of one or more rules, the system and method notify a predetermined group of recipients that a rule has been satisfied and requests authorization from the predetermined group of recipients to create a new forum. Upon an indication from one or more of the predetermined group of recipients that a new forum is desired, the systems and methods of this invention establish a new forum and optionally notify the participating users that the new forum as been established.

While existing electronic message systems work well in general, they often tend to overwhelm an electronic message recipient with numerous electronic messages that may or may not be relevant to the recipient. For example, if the user is subscribed to multiple lists, throughout the day a user is likely to receive postings to many of these lists. Some of these posting will be of interest to the user while others are not. Additionally, since the receipt of these postings will be interspersed with the receipt of messages from other sources, the messages sent to a given list during a single day will not be temporally grouped. Therefore, the correlation between the postings can be lost, and it can be difficult for a user to track a conversational thread given the nonlinear arrival of the various electronic messages.

The systems and methods of this invention provide tools for managing electronic messages. In particular, the tools allow for sender-independent digesting and sampling of electronic messages. This rule-based approach to managing electronic messages allows a user to control, for example, when messages are received, how the messages are grouped, and whether to actually receive, or filter, a particular message.

The first tool for managing electronic messages according to this invention is the user-parameterized digest tool. The digest tool allows a user to specify message-based criteria that define candidate messages for a digest, or a compilation of electronic messages. Furthermore, the user can configure the digest tool to specify properties of each digest, such as, formatting, delivery dates, frequency, structural organization, formatting, such as, HTML, extended HTML, dynamic HTML, plain text, or the like.

The second tool for managing electronic messages according to this invention is the user-parameterized sampling tool. The sampling tool allows a user to specify a set of message-based criteria that define candidate messages for sampling or selectively selecting one or more electronic messages. Furthermore, the sampling tool allows a user to specify criteria over the candidate set of messages that define which subset of the candidate messages is actually received. For example, the user can configure the sampling tool to send only every n^{th} message that meets the candidate criteria, send a message that meets the candidate criteria only when there is a topic shift in the message stream, send a message that meets the candidate criteria when that message receives a large number of responses, send a message that meets the candidate criteria when the rate of arrival of messages has changed significantly, or the like. Thus, with the sampling tool, initial candidate messages are identified, and then only if the initial candidate messages meet an additional subset of criteria, is a message actually delivered.

Conventional list digesting is offered by many list managers to their subscribers. A subscriber who requests "digest mode" for a list receives at regular intervals a single electronic message that encapsulates all electronic messages sent during a specified digest period. Conventional list digesting does not typically offer subscribers options for managing or controlling electronic messages within the digest, nor control over the creation and delivery of the digest itself.

In contrast, the digesting tool according to the systems and methods of this invention allows a user to formulate rules for constructing a digest or sets of electronic messages, regardless of the options offered by the senders of those electronic messages or by the mailing list manager in the cases where messages come from a mailing list. Additionally, the digesting tool according to this invention allows the user full control over the digest format and frequency, independent of what might be offered by the original senders of the electronic messages.

Conventional electronic message filtering allows e-mail users to define message-specific criteria to determine whether an incoming electronic message will be received, or to determine, for example, where an electronic message will be stored. The sampling tool according to this invention allows users to define both a set of electronic messages for sampling and also stream-based criteria for determining what electronic messages from the candidate set will be received. For example, criteria that specify whether an electronic message should be received can be based on population-based criteria rather than single-item-based criteria. For example, a user could employ a conventional filtering technique to specify that only electronic messages from a particular list that do not contain particular word(s), for example, the word "sale" should be received. In contrast, a user could employ the sampling tool according to the systems and methods of this invention to specify that, for example, every sixth electronic message from a particular list should be received. Alternatively, for example, a user might specify that a electronic message from a particular mailing list should only be received when there is a topic shift in that particular stream of electronic messages from one or more contributors to that mailing list.

Aspects of the present invention relate to an electronic message management system comprising an information selection device that identifies an electronic message based on one or more sender-independent message-based rules. An electronic message management device at least one of selects and integrates the electronic message into a digest or samples the electronic message.

Aspects of the present invention also relate to a method for managing electronic message comprising identifying an electronic message based on one or more sender-independent message-based rules and at least one of selecting and integrating the electronic message into a digest or sampling the electronic message.

Aspects of the present invention additionally relate to an information storage media comprising information that identifies an electronic message based on one or more sender-independent message-based rules and that at least one of selects and integrates the electronic message into a digest or samples the electronic message.

Aspects of the present invention additionally relate to an electronic message management system comprising a data selection system that identifies at least one electronic message from a plurality of electronic messages based on a sender based rule. An electronic message management system is functionally associated with the data selection system and is adapted to communicate the at least one electronic message into a file.

Electronic messaging, such as e-mail, has become an increasingly important mode of communication. Many people, however, feel overwhelmed by the quantity of e-mail they receive. Through the use of list digesting and electronic message sampling, e-mail users are able to diminish the interruptions and cognitive load imposed by receipt of electronic messages. In particular, digesting limits interruptions because electronic messages are collected and sent as a single electronic message at regular intervals. This allows electronic messages from the same list to be viewed in close spatial and temporal proximity, lessening the cognitive burden on the user to recall the context surrounding an individual message. With message sampling, a user defines rules that specify message-specific criteria for identifying candidate messages and also rules that define which candidate messages should be delivered. With message sampling, interruptions decrease since fewer messages are received.

### DETAILED DESCRIPTION OF THE INVENTION

By monitoring traffic in an information stream, the systems and methods of this invention can determine when traffic on a particular topic has reached a threshold. Upon meeting the threshold criteria, the systems and methods of this invention propose to the contributors of that topic, for example, through a user interface, that a new discussion forum be created. Upon confirmation that one or more of the contributors desires a new discussion forum, the systems and methods of this invention create the new discussion forum and automatically subscribe the list of contributors to the new discussion forum.

In particular, the systems and methods of this invention perform a number of functions for monitoring and managing an information stream. Thus, for example, the systems and methods of this invention identify when a new forum might be of value. Specifically, an agent subscribes to one or more discussion fora, or information streams, as a member in order to receive the information within that forum. The agent monitors the traffic in that forum in order to determine opportunities for creating a new discussion fora. Upon satisfaction of one or more criteria, or rules, a suggestion for a new forum is sent to the users participating in the identified information stream. Specifically, the agent automatically generates a name for the new forum, based on, for example, the subject matter of the information exchanged on the topic triggering the suggesting of a new forum, and then sends a suggestion message to all users who participated in the discussion on that particular identified topic querying whether they would like to create a new discussion forum for that topic.

If any one or more of the topic contributors agrees that a new discussion forum should be created for that topic, a new forum is created. Once the forum has been created, topic contributors can be automatically added as forum members to the new forum. Furthermore, the other members of the parent, or original, discussion forum can optionally be invited to also participate and/or join the new forum. Since some of the members of the newly created forum may not wish to immediately participate fully in the new forum, the discussion and transactions within the new forum can be automatically archived so that non-members may periodically review discussions within the new, or child, forum.

If an invited user, or any other user, decides to join the new forum, the user has the option of receiving a digest containing all or a portion of the messages posted to the new forum. Furthermore, periodic reports can also be sent to the parent forum to provide status information linked to the activity on the child fora that have been spawned from the parent discussion forum. The report generation can be determined and sent, for example, at regular intervals, or when, for example, traffic on the child forum is high, or the like.

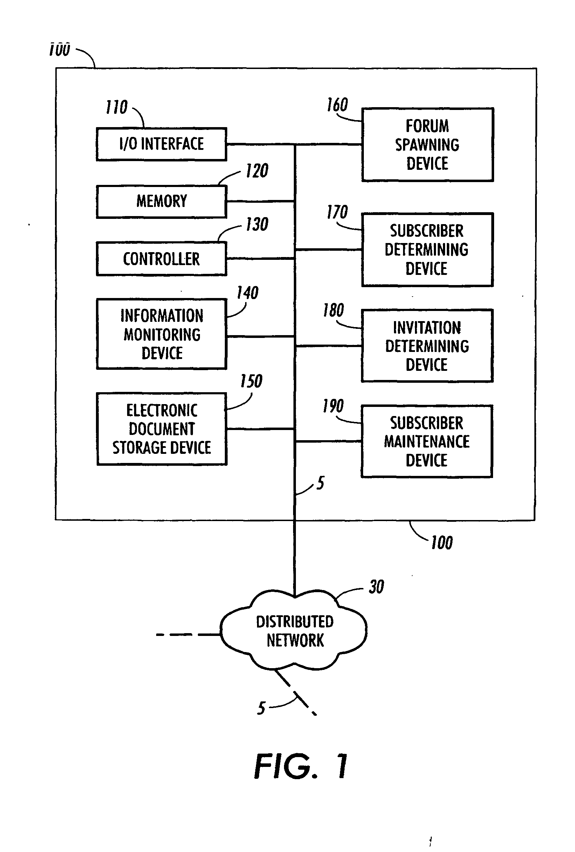

FIG. 1 illustrates an exemplary embodiment of a forum monitoring device 100 according to en exemplary embodiment of the present invention. The forum monitoring device 100 comprises an I/O interface 110, memory 120, a controller 130, an information monitoring device 140, an electronic document storage device 150, a forum spawning device 160, a subscriber determining device 170, an invitation determining device 180 and a subscriber maintenance device 190, all interconnected by link 5. The forum monitoring device 100 is connected to at least one distributed network 30 which is connected to one or more information streams and/or other distributed networks.

While the exemplary embodiment illustrated in FIG. 1 shows the forum monitoring device and associated components collocated, it is to be appreciated that the various components of the forum monitoring device 100 can be located at distant portions of a distributed network, such as a local area network, a wide area network, an intranet and/or the internet, or within a dedicated forum monitoring system. Thus, it should be appreciated that the components of the forum monitoring device 100 can be combined into one device or collocated on a particular node of a distributed network. As will be appreciated from the following description, and for reasons of computational efficiency, the components of the forum monitoring device 100 can be arranged at any location, such as a general purpose computer, within a distributed network without affecting the operation of the system.

Furthermore, the links 5 can be a wired or a wireless link or any other known or later developed element(s) that is capable of supplying electronic data to and from the connected elements.

In operation, an information stream is received via the distributed network 30 and the links 5. The information stream can include, for example, electronic messages, e-mail messages, postings to a discussion forum, such as bulletin board service, or the like. In general, an information stream can be comprised of any type of electronic documents. The information stream is received via the I/O interface 110, and with the cooperation of the memory 120 and controller 130 monitored by the information monitoring device 140.

The information monitoring device 140 monitors the information stream and compares information about a portion of the information stream to a set of rules, such as a threshold. For example, the information about the portion of the information stream can include how long the current discussion forum has been in use, how many messages have been exchanged on the forum, whether there has been a suggestion to create a new discussion forum, whether a certain number of messages on a particular topic been received within a predetermined time period, whether the rate of messages exchanged on a particular topic been statistically greater than normal, whether a certain number of forum members exchanged messages on a particular topic within a predetermined time period, or the like. In general, the rules which trigger the information monitoring device 140 to perform an additional task can be established based on the particular environment and/or forum the forum monitoring device 100 is monitoring. Therefore, for example, the forum monitoring device 100 can have a plurality of sets of rules, wherein different sets of rules apply to specific monitored fora. Alternatively, the information monitoring device 140 can also apply the same set of rules to one or more monitored information streams or fora.

Thus, the forum monitoring device 100 is subscribed to or otherwise associated with one or more fora. For example, the forum monitoring device can be assigned an e-mail address. Then, using this e-mail address, the forum monitoring device 100 is added as a subscriber to one or more fora. As electronic documents are added to the subscribed forum, these documents are delivered to the forum monitoring device 100 via the e-mail address. As an information stream from the one or more subscribed fora is received by the forum monitoring device 100, the information monitoring device 140 monitors the information stream in order to determine opportunities for creating a new discussion forum. Upon satisfaction or of one or more rules, such as satisfying a threshold, a new forum is suggested.

In particular, the thresholds may be established such that, for example, the current discussion forum has been in use for x days and/or y messages have been exchanged within the forum. Alternatively, the rules can be established to suggest a new forum when there has not been a suggestion to create a new discussion forum for the current topic and there have been a threshold number of messages posted on the topic within a predetermined time. Alternatively, the suggestion to create a new forum can be triggered if there has been a suggestion to create a new discussion forum for the current topic and there has been a predetermined number of messages posted on the topic within a predetermined time period or any predetermined number of messages since the last suggestion was made. In general, the rules governing triggering of a suggestion to create a new forum can be configured based on the particular environment, information streams and/or fora being monitored.

Upon the satisfaction of one or more rules, the invitation determining device 180, with the cooperation of the subscriber determining device 170, determines a name for the new forum, for example, based on the subject lines of the message as exchanged on the trigger of topic, or based on any other characteristics of the trigger topic. The invitation determining device 180 then sends a suggestion message to all subscribes who posted messages about that topic asking if the subscribers would like to create a new discussion forum for that topic. In particular, the subscriber determining device 170 determines from the information stream all users who participated or posted messages about the particular trigger topic within the forum.

The invitation determining device 180 forwards to the identified subscribers a notification message suggesting creation of a new discussion forum for the identified topic. The invitation determining device 180 monitors responses from the identified subscribers to determine if one or more new forum(s) should be created. For example, the responses could indicate that two additional fora are appropriate. In this exemplary scenario, two new fora would be created.

Upon receiving an indication from any of the identified subscribers to whom a notification message was sent that a new forum should be created, a new forum is created with the aid of the forum spawning device 160. However, it should be appreciated that while in this particular exemplary embodiment only one reply to the notification message is required to trigger creation of a new forum, additional rules can be established which may, for example, require that a predetermined number of subscribers request creation of a new forum before a new forum is created.

Upon receiving the request for a new forum, the forum spawning device 160 creates a new forum. This new forum can be named based on the name determined by the invitation determining device 180 or be amended, for example, based on one or more subscribers' desires. Once the forum has been created and named, the subscriber maintenance device 190 automatically adds the subscribers identified by the subscriber determining device 170 to the new forum. Additionally, the subscriber maintenance device 190 can optionally also notify all or a portion of the parent discussion forum, plus any other recipients of messages posted on the trigger topic, that a new forum has been created and that the other members are welcome to subscribe.

The electronic document storage device 150 allows forum members to remain current with transactions within a forum. Specifically, the discussions within a forum can be automatically archived so that members and/or non-members may periodically review the new discussion. For example, if a user decides to join a forum, the user can automatically retrieve, with the cooperation of the electronic document storage device 150, and the cooperation of the I/O interface 110, the memory 120 and the controller 130, a digest type message containing all or a portion of the recent messages posted within the forum. Alternatively, periodic reports can be sent, with the aid of the electronic document storage device 150 and the subscriber maintenance device 190 to another discussion forum to indicate activity within the forum that have been spawned from, for example, the parent discussion forum. These reports can be generated and reported at predetermined time intervals, or, for example, when traffic in a subforum has reached a threshold, or the like.

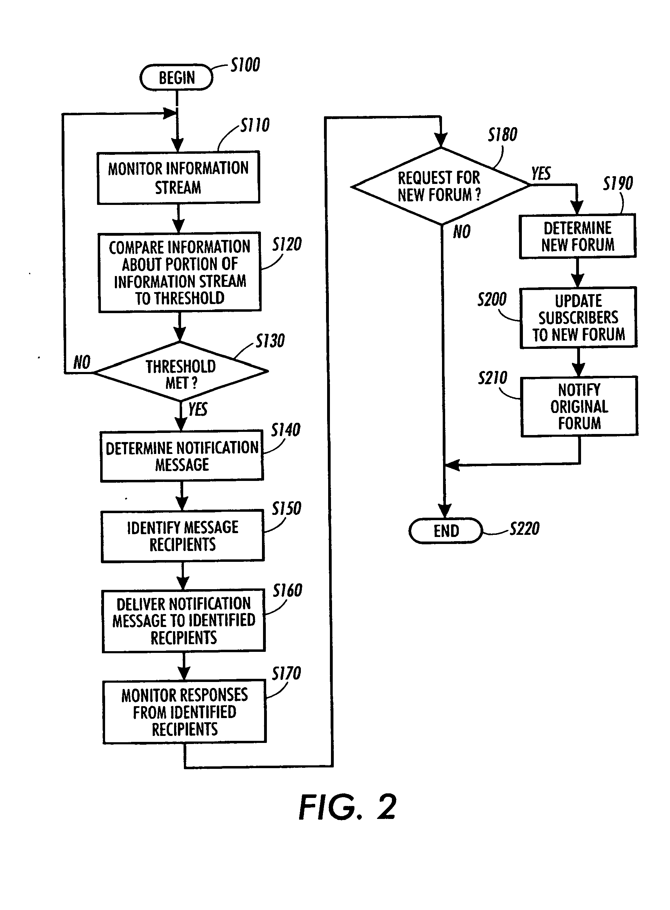

FIG. 2 is a flowchart outlining one exemplary embodiment of a method for monitoring an information stream, such as a forum, according to the invention. In particular, control begins at S100 and continues to S 110. In S110, an information stream is monitored. Next, in S120, information about a portion of the information stream is compared to a set of rules, such as satisfying one or more thresholds, Boolean comparisons, or the like. This comparison can be a rule-based comparison, statistical model-based comparison, or the like. Then, in S130, a determination is made as to whether one or more of the rules has been satisfied. If one or more of the rules have been satisfied, control continues to S 140. Otherwise, control jumps back to S 110.

In S140, a notification message is determined. Next, in S150, the message recipients are identified based on, for example, participation within the monitored information stream. Then, in S160, the notification message is delivered to the identified message recipients. Control then continues to S170.

In S170, the responses from the identified recipients are monitored. Next, in S180, a decision is made whether the responses from the identified recipients request a new forum be created. If a new forum request is received, control continues to S190. Otherwise, control jumps to S220.

In S 190, a new forum is created whose name is, for example, based on the subject lines of the messages exchanged or some other characteristic of the trigger topic. Next, in S200, the subscribers to the new forum are updated by including those subscribers identified as contributing to the identified topic. Then, in S210, the parent forum is optionally notified that a new discussion forum has been created for the identified topic. Control then continues to S220 where the control sequence ends.

For example, the systems and methods of this invention have in embodiments been used to work with the internal discussion lists solely within the workplace of the inventors. In particular, the exemplary agent has been assigned an e-mail account. A distributed network interface allows users to ask the exemplary agent to monitor, or to stop monitoring, the internal discussion lists. In response to such a request, the exemplary agent subscribes, or unsubscribes to the specified lists using a programmatic interface to the internal discussion lists. Once the exemplary agent is a member of the list, the exemplary agent monitors the list traffic. The exemplary agent then judges messages to be on the same topic both by checking for in-reply-to message identifications and by looking for matching subject lines. If all parameter values are satisfied, the exemplary agent will generate a unique name for a new discussion list, based on the subject lines of the topic messages. The exemplary agent will then send a suggestion message to everyone who posted a message on the current topic. Users can agree to this suggestion by responding to the suggestion message. Users may also include a line in the message that requests that the forum be created with a different name than the name determined by the exemplary agent. Once the exemplary agent receives a suggestion acceptance message, the exemplary agent creates a new discussion list, or forum. The exemplary agent then automatically subscribes itself to the list. The exemplary agent also sets up a distributed network accessible message archive using, for example, a bulletin board or digest archiving service. The exemplary agent seeds the archive with the trigger messages that caused the forum to be created. Finally, the exemplary agent automatically subscribes all of the topic contributors to the list, or new forum, and then sends an invitation message to the whole list and to any other recipients of the topic messages. Invitees may join the list simply by responding to the invitation message. New members can automatically receive any postings that were sent to the new forum before they joined. Members who do not join the list can still be kept informed about list activity through reports. For example, at a predetermined interval, the exemplary agent sends a message to each monitored discussion list with information about activity, for example, including high frequency keywords, number of messages exchanged, number of users, or the like, on discussion lists spawned by the monitored list. Additionally, whenever there is a high activity during a predetermined time on a spawned discussion list, the parent list can be notified.

For the current exemplary agent, the parameters, or thresholds to trigger requesting of a new forum were set as follows: seven days was chosen as the number of days a forum must have existed before a new forum can be suggested. One day was chosen as a number of days that must have elapsed since a new forum was suggested for a particular topic. Seven days was used as a window within which messages must have been exchanged in order to be counted. Three was chosen as the number of messages on a topic that must be exchanged for a suggestion to be made if no suggestion has been previously made. And finally, 10 was chosen as the number of messages on a topic that must be exchanged for a suggestion to be made if a suggestion has been made previously.

However, it should appreciated that the above-identified parameters can be altered depending on the particular environment, forum, number of users, or the like within which the forum monitoring system is implemented.

Historically, digests are only available on request from, for example, e-mail lists that support a digest mode. However, the digest tool according to this invention allows a user to obtain a digest for any information stream, independent of the options provided by a list manager or the information source. The digest tool allows a user to obtain a digest for any set of messages that meet predefined criteria. For example, a user may wish to receive in digest form all messages bearing a particular subject line, for example, to obtain a digest for a thread rather than for a list. Additionally, a user may desire to have more control over the characteristics of a digest. The digest tool according to this invention allows a user to specify the type of digest they receive, for example, the frequency with which it is received, again, regardless of what options are provided by the sender of the e-mail or electronic message that is digested.

Specifically, users establish rules for a digest similarly to how rules are specified for filtering. A digest rule outlines a set of criteria that must be met for a message to be included in a digest. For example, a digest rule might stipulate that all electronic messages sent to "info@parc.xerox.com" should be received in digest mode. As this example illustrates, criteria often resemble fielded Boolean queries, where the fields are common electronic message fields, such as, "To:", "cc:", "From:", "Subject:", or the like. Alternatively, the selection criteria might be specified by the user as an abstraction over a plurality of fields. For example, the user might specify that an electronic message that is sent to a given e-mail address should be digested, where the "sent to" portion of the electronic message might cover both the "To:" and the "cc:" fields. Another exemplary abstraction is "is a party to" which may, for example, cover all address fields. Alternative embodiments of the digest tool may use techniques from information retrieval, thus allowing users to specify that electronic messages similar to the current electronic message should be received in digest mode. In this instance, similarity can be measured, for example, in terms of vector similarity between the body of a selected electronic message and the bodies of incoming electronic messages.

Supplemental to specifying criteria for deciding when messages should be included in a digest, users can also specify characteristics of the digest itself. For example, a user may choose among different digest styles. Some digests may include attachments, while others may not. Some digests include the full text of each message, whereas other digests may include just summary information of the individual messages with, for example, links, such as URLs to the full text of each message. Alternatively, some digests might include simply the first nonquoted line from each sent message. Digests may vary in whether they present messages in increasing or decreasing chronological order. Using the digest tool according to this invention, users may chose to create their own digests using the methods described herein, even for lists that offer digests, in order to receive the digest in the user's preferred style. In addition, users can specify when and how often the digest should be received. For example, a user may choose to receive, for example, one set of messages in a daily digest at a predetermined time, and another set of messages in a weekly digest at another predetermined time.

The sampling tool according to this invention allows users to opt only to view representative messages from a stream messages that meet a particular set of criteria, or rules. For some electronic messages, readers are not concerned with reading every single message that is sent. Instead, these readers may, for example, merely want to keep abreast of the general directions taken by the conversations in the electronic messages. For example, a user may be interested in peripherally monitoring developments in a particular community even if the user may not be particularly involved in that community. Additionally, monitoring can be applied to sets of messages that do not necessarily correspond to lists. For example, a user may want to only sample messages bearing a particular subject line, for example, to stay abreast of a thread without receiving every message in that particular thread.

Specifying what set of messages should be received with the sampling tool proceeds in a similar way as specifying what set of messages should be received using the digest tool according to this invention. However, wherein the digest tool includes all messages from a set of messages that are arriving in a particular period, sampling of electronic messages results in delivery of only a certain subset of the messages from the set of messages being received. Thus, the second stage of the sampling further defines the criteria that a message must meet to be forwarded to a user. In contrast to electronic message filters, where the criteria for message delivery are typically message-based, sampling techniques may refer to characteristics of the defined message population. Frequency-based sampling rules stipulate that every n^{th} message to meet the sampling criteria should appear in a user's inbox. Alternatively, for example, a representative message from the sampled pool of messages might be sent every predetermined number of days.

More complex rules may be put in to place to specify when a message should appear. For example, a user may specify that a message should be delivered whenever the "topic" of the information stream has shifted. For example, video thumbnailing techniques allow a video to be summarized by a series of stills, where each still is the first still to occur after a scene change. A variety of techniques may also be used to determine that a topic has changed, ranging from simple algorithms that equate topics with subject lines to more sophisticated algorithms that, for example, cluster messages to determine major topic changes. An alternative to this form of sampling is to assign a priority level to a message and to send it only if the message priority exceeds a set threshold and the number of recently delivered sample messages has not exceeded a separate threshold. Factors that may contribute to a message's priority level may include, for example, its length, the number of attachments, keywords, genre, number of responses, importance of the sender, or the like, for example, does the message pertain to a vacation, jokes, or a meeting coordination. A message's priority level may change over time as additional messages are received and reviewed.

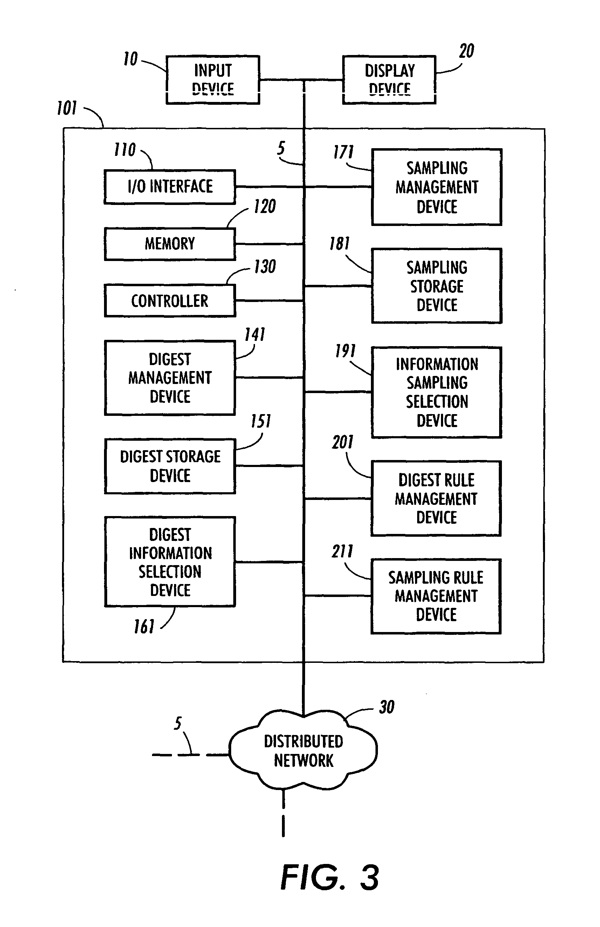

FIG. 3 illustrates an exemplary electronic message management system 101. The electronic message management system 101 comprises an I/O interface 110, a memory 120, a controller 130, a digest management device 141, a digest storage device 151, a digest information selection device 161, a sampling management device 171, a sampling storage device 181, an information sampling selection device 191, a digest rule management device 201 and a sampling rule management device 211, all interconnected by link 5. The electronic message management system 101 is also connected to at least one distributed network 30 which may or may not also be connected to one or more other electronic message management systems or other distributed networks, as well as one or more input devices 10 and display devices 20.

While the exemplary embodiment illustrated in FIG. 3 shows the electronic message management system 101 and associated components collocated, it is to be appreciated that the various components of the electronic message management system 101 can be located at distant portions of a distributed network, such as a local area network, a wide area network, an intranet and/or or the internet or within a dedicated electronic message management system. Thus, it should be appreciated that the components of the electronic message management system 101 can be combined into one device or collocated on a particular node of a distributed network. As will be appreciated from the following description, and for reasons of computational efficiency, the components of the electronic message management system can be arranged at any location within a distributed network without affecting the operation of the system.

Furthermore, the links 5 can be a wired or wireless link or any known or later developed element(s) that is capable of supplying and communicating electronic data to and from the connected elements. Additionally, the input device 10 can be a keyboard, mouse, speech to text converter, or the like. The display device 20 can be a computer monitor, a display on a PDA, or any other device capable of displaying information to one or more users.
In operation, a user via input device 10, and with the cooperation of the I/O interface 110, the memory 120, the controller 130, and the digest management device 141, establishes rules for assembling a digest of electronic messages. In particular, these rules can specify that a message must, for example, be from one or more lists, be about a particular subject matter, be from a particular sender, include a particular e-mail address in either the "To:" or "cc:" fields of the message, or the like. The rules are then stored in the digest rule management device 201.

Thus, depending on the rules governing the digest management device 141, one or more sources of information, such as electronic message streams, are monitored. The incoming message streams are received via the links 5 in the distributed network 30. Specifically, one or more information streams comprising electronic messages are received via the link 5 and one or more distributed networks 30 and analyzed by the digest management device 141. The digest management device 141 determines if selection criteria for establishing a digest have been met. If, after a comparison of the incoming message to the rules stored in the digest rule management device 201, an electronic message in the incoming information stream meets one or more selection criteria, the digest management device 141 in cooperation with the digest information selection device 161 determines an appropriate digest to which the selected electronic message should be added. For example, a user may have established a plurality of different digests. Therefore, based on the rules governing the operation of the digest management device 141, different electronic messages can be routed for integration into different digests. If an incoming electronic message meets a predefined criteria for being added to an already existing digest, the incoming electronic message can be added to that digest. However, if a digest does not exist but an electronic message meets a given selection criteria, the digest management device 141 can create a new digest which is stored in the digest storage device 151. This selected electronic message is then added to the new digest and the updated digest stored in the digest storage device 151. This process of scanning information streams for electronic messages that meet certain selection criteria continue until a trigger is met that forwards one or more digests to the user.

Specifically, a user can define in the digest rule management device 201, for example, at a predetermined time, when a threshold number of messages has been received, when the user's inbox is at a predetermined size, when the user's activity level is at a predetermined threshold, or the like, at which point the digest, stored in the digest storage device 151 is forwarded to a user and displayed, for example, on the display device 20.

More particularly, the digest rule management device 201 interfaces with the user to store and manage rules governing the selection of electronic messages in one or more information streams. As previously discussed, these rules can include Boolean comparisons, statistical-based selection criteria, fuzzy logic based selection criteria, keyword based selection criteria, date, subject, recipient or sender based selection criteria, or the like. Thus, the digest information selection device 161, cooperating with the digest rule management device 200, the I/O interface 110, the memory 120 and controller 130 are capable of continuously monitoring one or more information streams of, for example, electronic messages, received via link 5 and the distributed network 30.

Sampling of electronic messages is accomplished similarly to assembling a digest of electronic messages. Specifically, the sampling management device 171 in cooperation with the sampling rule management device 211 and the information sampling selection device 191 monitor one or more information streams received via links 5 and the distributed network 30. These information streams can include, for example, electronic messages such as e-mail messages, or any serial message stream or serial database recording system events such as events in a research laboratory where the events may include, for example, customary visits or inventions filed, or the like, or combinations thereof.

Thus, once the sampling thread selection criteria have been determined and established by a user, and saved in the sampling rule management device 211, incoming electronic messages are monitored to determine if they meet one or more of the selection criteria established by the sampling rules. If one or more incoming electronic messages meet the initial selection criteria, that electronic message is selected. Next, the information sampling selection device 191, in cooperation with the sampling management device 171 and the sampling rule management device 211 performs a check to determine if supplemental selection criteria are present. Thus, a user can specify a set of message-based criteria that define candidate messages for sampling and also specify criteria that define a subset of messages to be received. These supplemental selection criteria allow for selection of one or more subsets of electronic messages based on rules stored in the sampling rule management device 211. This process continues until all selection rules that apply to initially selected messages have been applied. If the sampled electronic message meets the one or more selection criteria, the selected electronic message is stored in the sampling storage device 181. Then, the electronic message can be forwarded to a destination as defined in the sampling management device 171.

Alternatively, if the initially selected electronic message fails one or more of the sampling selection criteria, the message is not sampled, and the information sampling selection device 191 returns to monitoring electronic messages in the one or more information streams.

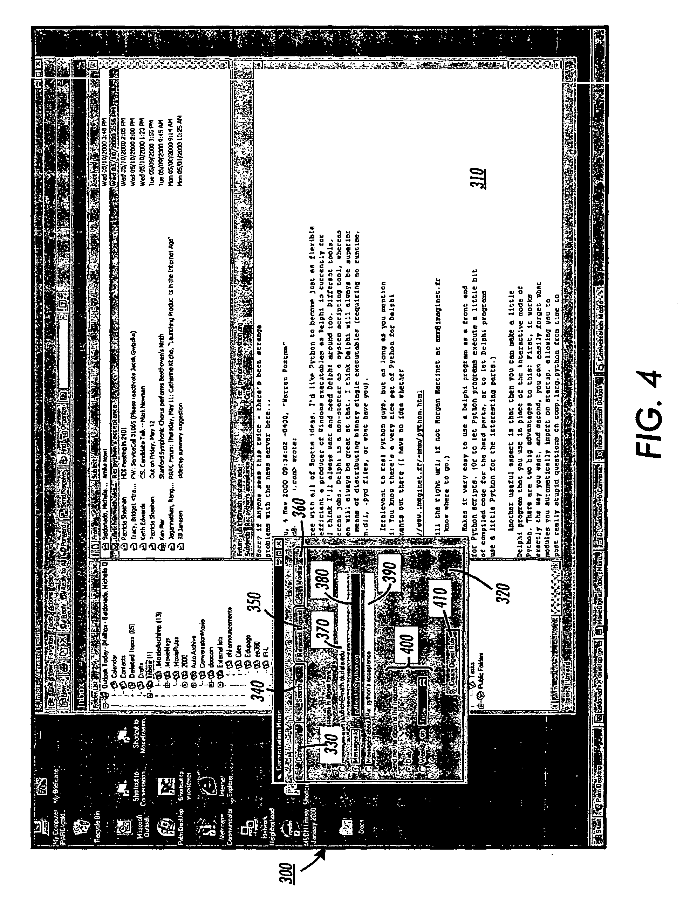

FIG. 4 illustrates an exemplary user interface 300. The user interface 300 comprises an electronic message portion 310 and an electronic message management portion 320. The electronic message management portion 320 comprises a context portion 330, a search portion 340, a monitor portion 360 and a digest portion 350, comprising selection criteria portions 370-390, digest forwarding criteria portions 400 and a create digest rule selection button 410.

The digest portion 350 illustrates exemplary selection criteria for assembling electronic messages in digest form. Specifically, the digest portion 350 allows assembly of messages in digest form by specifying one or more of "From:" criteria 370 "To:" criteria 380 and about or "Subject:" criteria 390. Additionally, the digest portion 350 allows a user to specify when a digest is to be delivered. In this exemplary embodiment, a user can select either daily or weekly delivery options in the delivery selection portion 400. Upon completing the digest selection and delivery options, a user selects, for example with the click of a mouse, the create digest rule button 410. The digest rule is then stored in the digest rule management device 200.

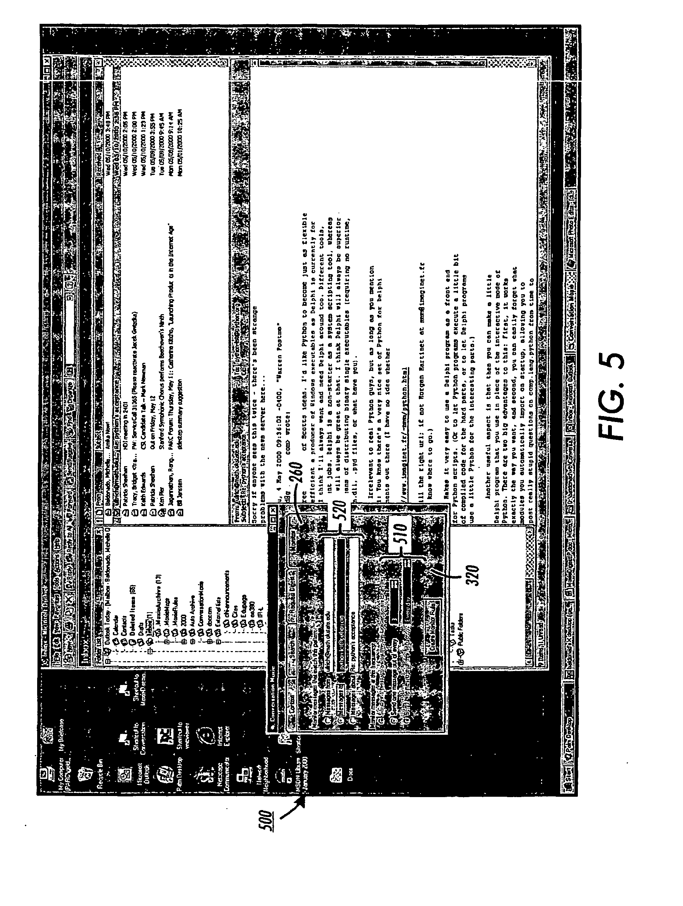

FIG. 5 illustrates an exemplary user interface 500 that may be displayed during creation of one or more sampling rules. In particular, the user interface 500 comprises the electronic message management portion interface 320, comprising a monitor portion 360, a monitoring frequency selection portion 510 and a monitoring message portion 520.

In particular, the monitor frequency selection portion 510 allows a user to select, for example, to "Send one message out of every three" messages. Alternatively, a user can select to send one message every time a topic appears to shift, to send a message at a predetermined frequency, or the like.

The pattern matching portion 520 allows a user to select, for example, messages from, to, or about specified criteria. Upon selection of the pattern matching and frequency monitoring characteristics, a user finalizes and creates the sampling rule which is stored in the sampling rule management device 210.

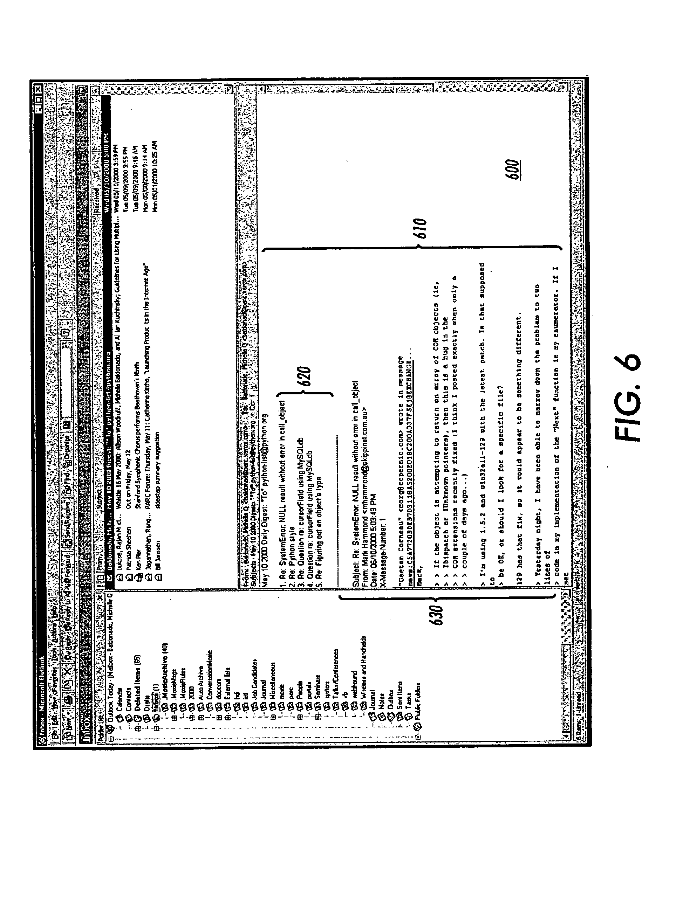

FIG. 6 illustrates an exemplary message display user interface 600. The exemplary message display user interface 600 comprises an illustrative digest 610. The digest 610 comprises, for example, an index 620 of the messages within the digest, and the message bodies themselves 630.

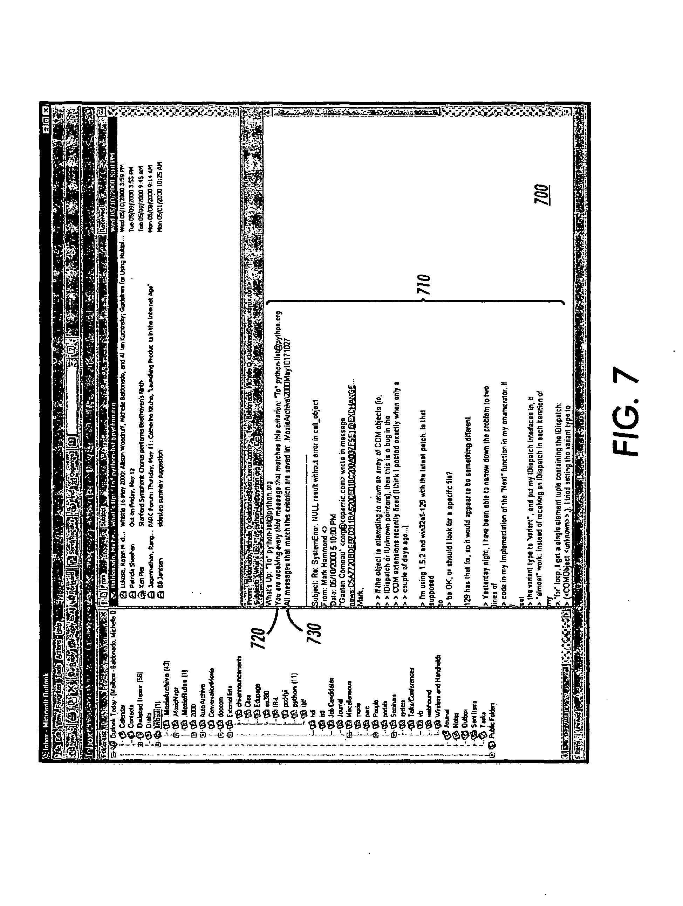

FIG. 7 illustrates an exemplary user interface 700 which illustrates an exemplary sampling of electronic messages 710. The sampling includes an indication portion 720 summarizing the sampling criteria. Additionally, the sample message 710 comprises a location portion 730 summarizing where all messages that match the candidate selection rules have been stored.

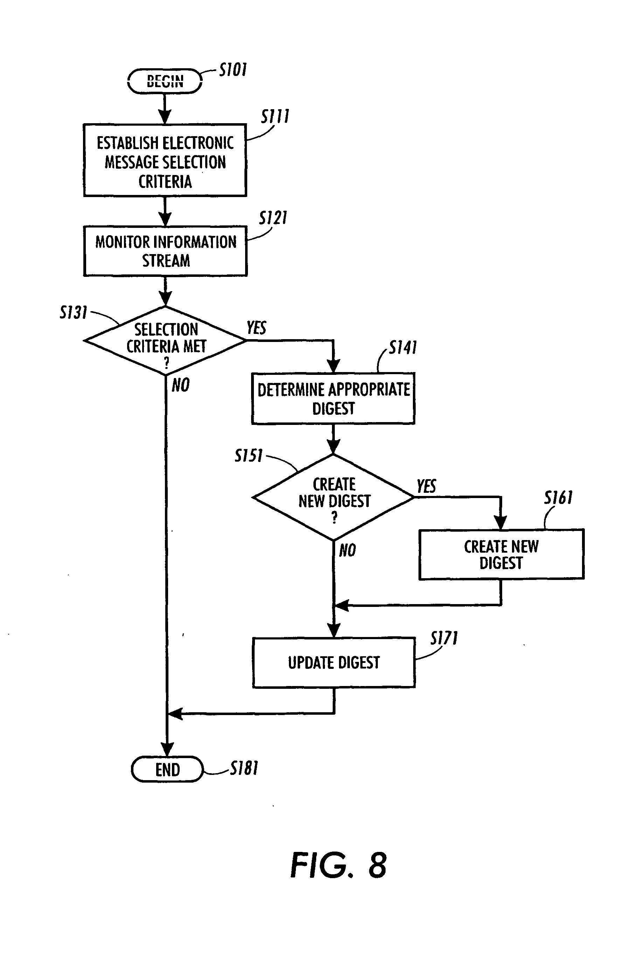

FIG. 8 illustrates an exemplary embodiment of managing a digest according to this invention. In particular, control begins in S101 and continues to S111. In S111, the electronic message selection criteria are established. Next, in S121, one or more information streams are monitored. Then, in S 131, a determination is made whether the selection criteria have been met. If the selection criteria have been met, control continues to S141. Otherwise, control jumps to S181.

In S141, the appropriate digest is determined for the selected electronic message. Next, in S151, a determination is made whether a new digest is required for the selected electronic message. If a new digest is required, control continues to S161 where a new digest is created. Otherwise, control jumps to S171 where an already existing digest is updated with the newly selected electronic message. Control then continues to S181 where the control sequence ends.

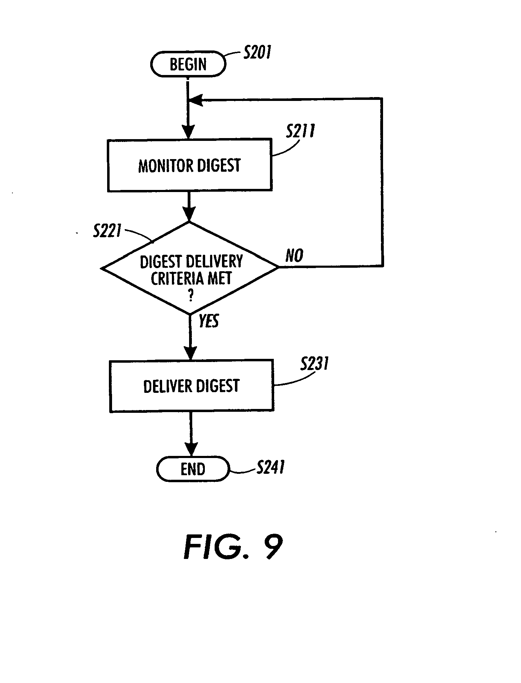

FIG. 9 is a flowchart outlining an exemplary embodiment for delivering a digest upon satisfaction of one or more digest rules. In particular, control begins at S201 and continues to S211. In S211, a digest is monitored. Next, in S221, a determination is made whether the digest delivery criteria have been met. If the digest delivery criteria have been met, control continues to S231 where the digest is delivered to a user. Otherwise, control jumps back to S211. Control then continues to S241 where the control sequence ends.

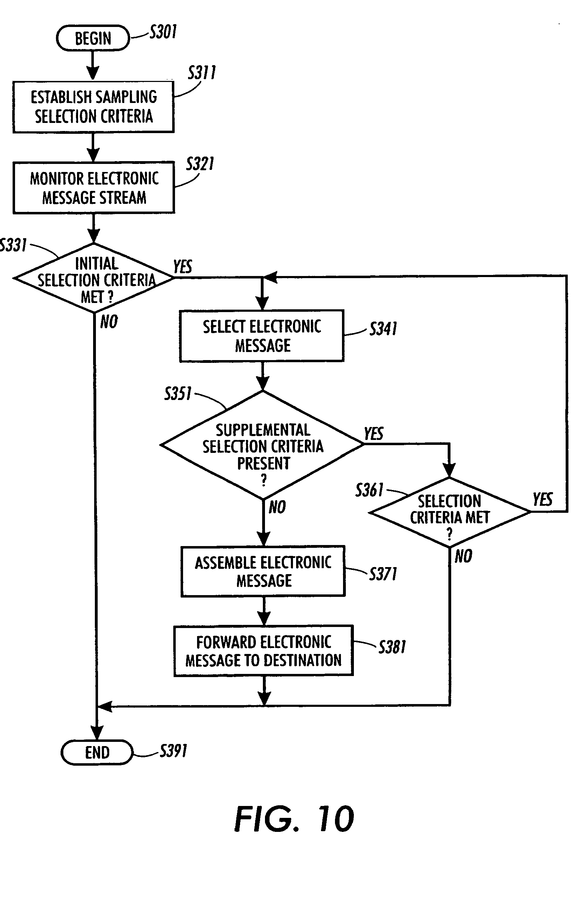

FIG. 10 outlines an exemplary embodiment for performing sampling of electronic messages according to this invention. In particular, control begins in S301 and continues to S311. In S311, the sampling selection criteria are established. Next, in S321, one or more electronic message streams are monitored. Then, in S331, a determination is made whether selection criteria have been met. If selection criteria have been met, control continues to S341. Otherwise, control jumps to S391.

In S341, the electronic message meeting the initial selection criteria is selected. Next, in S351, a determination is made whether supplemental selection criteria are present. If supplemental selection criteria are present, control continues to S361. Otherwise, control jumps to S371.

In S361, a determination is made whether supplemental selection criteria have been met. If the supplemental selection criteria have been met, control continues back to S341. Otherwise, control jumps to S391.

In S371, the sample electronic messages are assembled. Next, in S381, the electronic messages are delivered to a predetermined destination. Control then continues to S391 where the control sequence ends.

By combining determining related electronic messages and nondisruptively presenting these messages to a user, a user is assisted with electronic message composition. Furthermore, by presenting to a user related electronic messages during message composition, a user is provided with background information that could allow for a richer and more accurate electronic message.

A user initiates creation of an electronic message. Once a sufficient amount of information regarding the created electronic message is present, a search is made for related electronic messages. If related electronic messages are found, these related electronic messages are grouped and displayed, for example in a unique user interface, in such a way as to be nondisruptive to the user.

Then, for example, if the user desires to research previously exchanged related messages, a user can select one or more of the related messages to review their content. A user can then complete composition of the electronic message and forward the electronic message to its intended recipients.

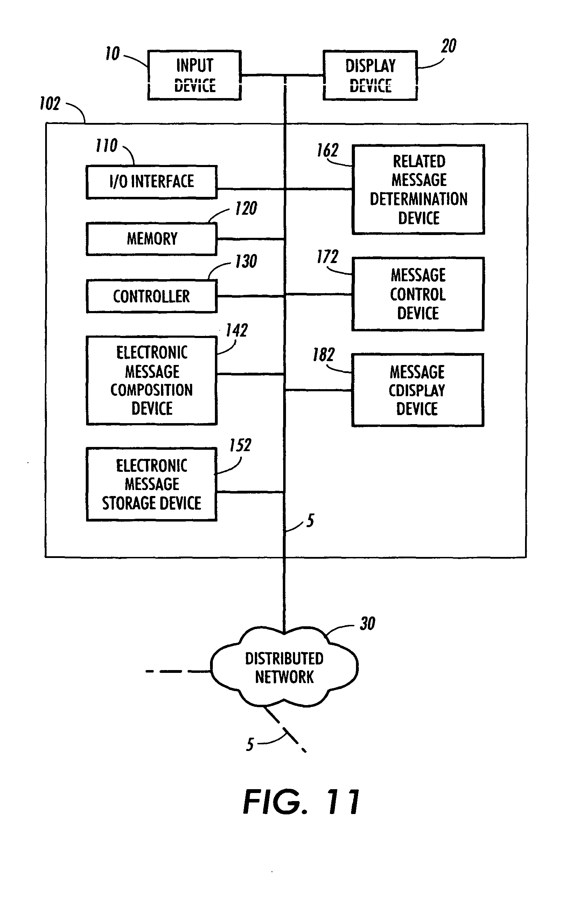

FIG. 11 illustrates an exemplary embodiment of an electronic message management system 102. The electronic message management system 102 comprises an I/O interface 110, a memory 120, a controller 130, an electronic message composition device 142, an electronic message storage device 152, a related message determination device 162, a message control device 172 and a message display device 182, and all interconnected by link 5. The electronic message management system 102 is also connected to at least one distributed network 30 which may or may not also be connected to one or more other electronic message management systems and/or other distributed networks, as well as one or more input devices 10 and display devices 20 via link 5.

While the exemplary embodiment illustrated in FIG. 11 shows the electronic message management system 102 and associated components collocated, it is to be appreciated that the various components of the electronic message management system 102 can be located at distant portions of a distributed network, such as a local area network, a wide area network, an intranet and/or the internet, or within a dedicated electronic message management system. Thus, it should be appreciated that the components of the electronic management system 102 can be combined into one device or collated on a particular node of a distributed network. As will be appreciated from the following description, and for reasons of computational efficiency, the components of the electronic message management system 102 can be arranged at any location within a distributed network without affecting the operation of the system.

Furthermore, the links 5 can be a wired or a wireless link or any known or later developed element(s) that is capable of supplying or communicating electronic data to and from the connected elements.

In operation, the user, via input device 10, initiates the creation of an electronic message. This electronic message can be, for example, an e-mail message, a posting to an electronic bulletin board service, an annotation to a shared document, or the like, and combinations thereof. In general, the electronic message can be any document that relays information to one or more intended recipients.

The input device 10, which may be, for example, a keyboard, mouse, speech-to-text system, or the like, with the aid of the I/O interface 110, the memory 120 and the controller 130, interfaces with the electronic message composition device 142. The electronic message composition device 142 can be, for example, an e-mail system or comparable electronic message creation system.

For example, the electronic message composition device 142 can be an e-mail system and associated user interfaces. In this instance, a user could select, for example, a "Create New Mail" portion of a user interface that is shown on display device 20. Upon selection of the "Create New Mail" portion of the user interface with, for example, the click of a mouse, a new user interface is created. This new user interface can include, for example, a "to" portion, a "subject" portion and a body portion.

As the new electronic message creation process progresses, information such as recipients, subject matter, or the like is entered into the user interface, and hence the electronic message. When a predetermined amount of the information is present, the related message determination device 162 initiates a search of related electronic messages stored in the electronic message storage device 152. This search can be based on, for example, a statistical analysis, a comparison of messages, a keyword search, an address field search, a recipient search, a sender search, a subject field search, a location search, an e-mail address search, a date search, a recency search, or the like, and combinations thereof. In general, the search can be configured by the user to search stored electronic messages for any criteria.

As each related message is discovered by the related message determination device 162, the message control device 172, with the cooperation of the electronic message storage device 152, assembles a list of the related messages. Then, with the cooperation of the message display device 182, and in cooperation with the controller 130, memory 120, the I/O interface 110 and the display device 20, the message control device 172 groups and displays portions of the related electronic messages. Then, if during the composition of a new message a user desires to refer to a previously exchanged message, the user can select, for example, with a click of a mouse, one or more of the related electronic messages to view the entire message. For example, each related electronic message can be a hyperlink or other association relating the displayed portion of the related electronic message to the entire message.

If a user desires to review related messages, upon completion of this review, the electronic message being created can be completed and the electronic message composition device 142, with the aid of controller 130, the memory 120 and I/O interface 110, delivers via the links 5 and the distributed network 30, the electronic message to the intended recipients.

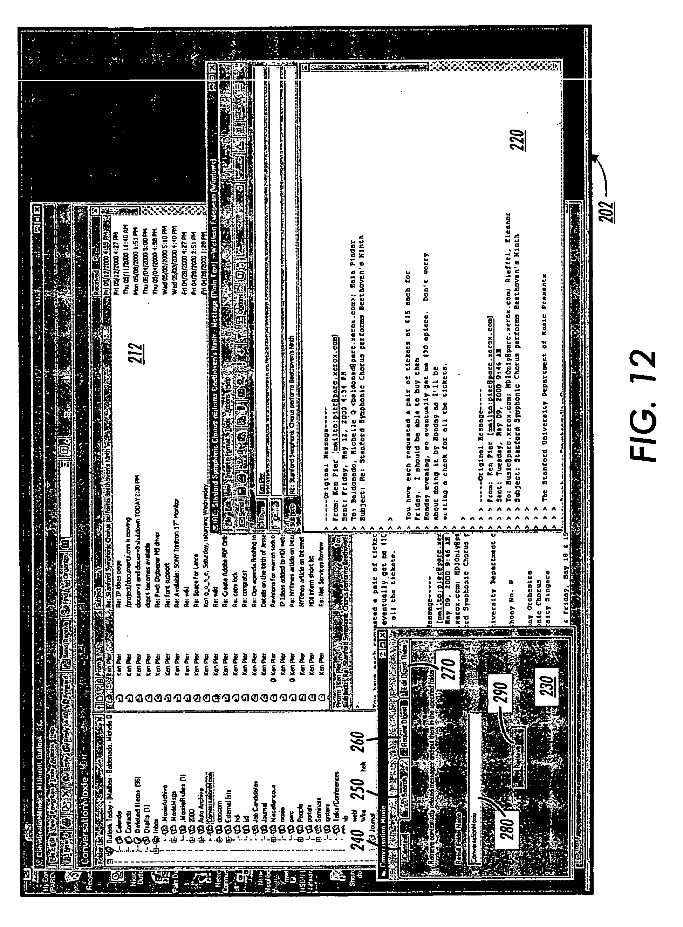

FIG. 12 illustrates a set of exemplary user interfaces that the electronic message management system 102 may display. In particular, the exemplary user interface 202 comprises an e-mail user interface 212, a message composition user interface 220 and an electronic message management system user interface 230. The electronic message management system user interface 230 comprises a context selection portion 240, a search selection portion 250, a request digest selection portion 260, an edit digest rules portion 270, a result folder name portion 280 and a retrieve button 290.

The electronic message management system user interface 230 allows a user to control the manner in which the electronic message management system 102 operates. In particular, the electronic message management system user interface 230 allows a user to specify the rules for determining relatedness of electronic messages, and to specify routing and/or display of these related electronic messages once found. In particular, the context selection portion 240 of the electronic message management system user interface 230 allows a user to specify where the contextually related messages are to be placed or stored. The result folder name portion 280 of the electronic message management system user interface 230 specifies the location of, for example, a folder, directory, file path, user interface, or the like, where the conversationally related messages are to be placed and/or stored. The retrieve button 290 allows a user to manually search and/or retrieve the contextually related messages stored at the destination location.

The search portion 250 allows, for example, the user to specify when the search is to be initiated, or, for example, which folders or sub-folders the search should encompass. For example, the user could specify that the search is to commence upon population of the adress and subject fields. Alternatively, the user could specify, for example, that the "Inbox," "Sent Mail" box and "Deleted Items" folders are to be searched for related documents.

The request digest portion 260 allows a user to specify that the results of the search are to be assembled into, for example, a digest. The composition and layout of the digest is governed by the digest rules which can be selectable and editable in the edit digest rules portion 270. For example, the digest rules may indicate, for example, a particular sort order of the messages, or that the digest should be forwarded to a predetermined location, or the like.

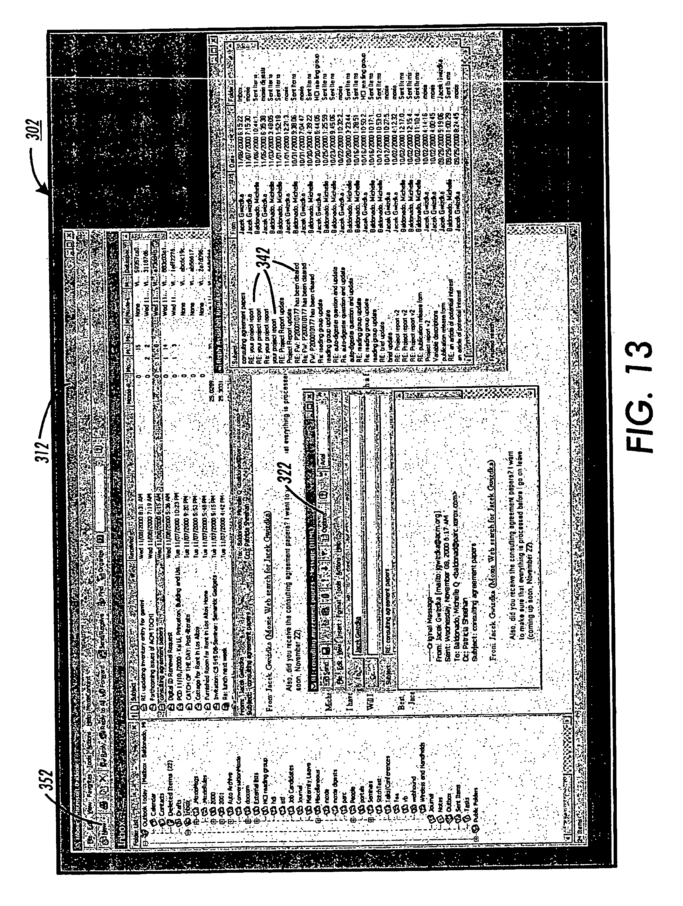

FIG. 13 illustrates an exemplary user interface 302 that the electronic message management system 102 may display. The user interface 302 comprises an e-mail user interface 312, an e-mail creation portion 322 and a related electronic message user interface 332.

Thus, for example, a user could initially select the new button 352 to initiate creation of an electronic message. The e-mail creation portion user interface 322 would then be displayed. The e-mail creation portion user interface 322, as previously discussed, can include a "To" portion, a "Subject" portion and a body portion. Upon completion of one or more of these categories, or based on some other search criteria, the electronic message management system 102 commences determination of related electronic messages. The discovered related electronic messages are then displayed in the related electronic message user interface 332 as related electronic messages 342. Each of the related electronic messages 340 is then individually selectable to view, for example, the entirety of the related electronic message.

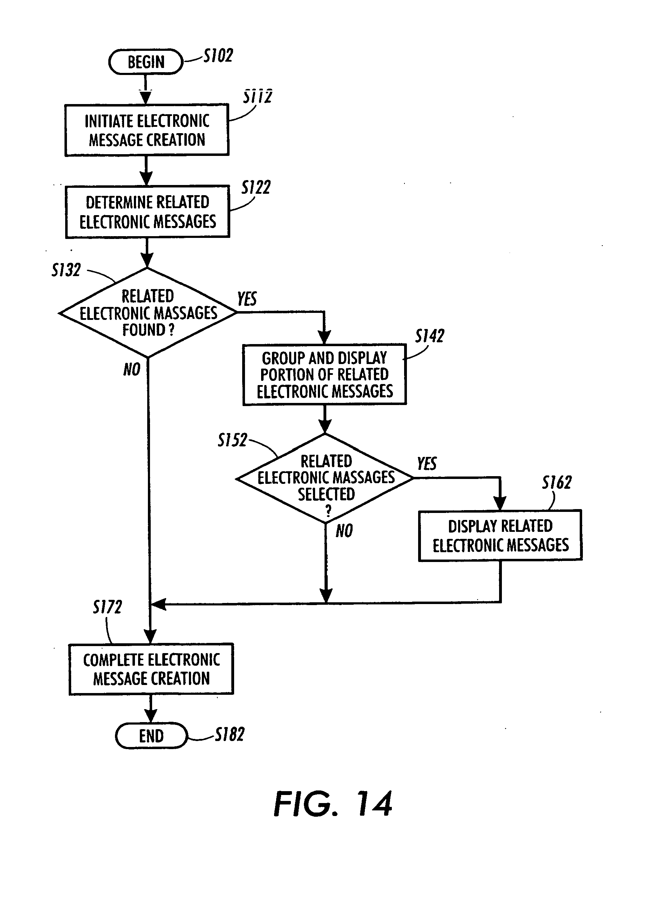

FIG. 14 illustrates an exemplary embodiment of the operation of the electronic message management system in according to this invention. In particular, control begins at S 102 and continues to S 112. In S 112, the electronic message creation is initiated. Next, in S122, the electronic messages related to the electronic message being created are determined. Then, in S132, a determination is made whether related electronic messages have been found. If related electronic messages have been found, control continues to S142. Otherwise, control jumps to S172.

In S 142, the related electronic messages are grouped and displayed. Next, in S152, a determination is made whether one or more of the related electronic messages have been selected. If one or more of the related electronic messages have been selected, control continues to S162. Otherwise, control jumps to S172.

In S162, the related electronic messages are displayed. Control then continues to S172.

In S172, the creation of the electronic message is completed and the electronic message is forwarded to one or more recipients. Control then continues to S 182 where the control sequence ends.

In an exemplary embodiment, the methods have been used in a Visual Basic® program that controls an off the shelf e-mail program. The electronic message management system of this exemplary embodiment detects when a user is issuing a reply to a message, which could be generalized to detect even when a user is composing any message, and then gathers the address and subject line information from that message. A background search is then conducted. The query used in the search is a Boolean OR with the following constraints: the existence of the recipients' names in any of the available address fields, the existence of the recipients' e-mail addresses in any available address fields, and the existence of the subject line in the subject field. Additionally, the electronic message management system functionality may be invoked explicitly by the user for any archived message. In this instance, the search takes place incrementally and results appear incrementally in, for example, a separate window. However, the user is not required to examine the contents of the separate window during message composition.

As illustrated in FIGS. 1, 3, and 11 the forum monitoring device 100, the electronic message management system 101, and the electronic message management system 102 each can be implemented either on a single program general purpose computer, or a separate program general purpose computer. However, the forum monitoring device 100, the electronic message management system 101, and the electronic message management system 102 each can also be implemented on a special purpose computer, a programmed microprocessor or microcontroller and peripheral integrated circuit element, an ASIC or other integrated circuit, a digital signal processor, a hard wired electronic or logic circuit such as a discrete element circuit, a programmable logic device such as a PLD, PLA, FPGA, PAL, or the like. In general, any device capable of implementing a finite state machine that is in turn capable of implementing one or more of the flowcharts illustrated in FIGS. 2, 6-8, and/or 14 can be used to implement one or more of the forum monitoring device 100, the electronic message management system 101, and the electronic message management system 102 according to this invention.

Furthermore, the disclosed method may be readily implemented in software using object or object-oriented software development environments that provide portable source code that can be used on a variety of computer or workstation hardware platforms. Alternatively, the disclosed electronic message management system may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized. The forum monitoring device 100, the electronic message management system 101, and the electronic message management system 102 and methods illustrated herein, however, can be readily implemented in hardware and/or software using any known or later-developed systems or structures, devices and/or software by those of ordinary skill in the applicable art from the functional description provided herein and a general basic knowledge of the computer arts.

Moreover, the disclosed methods may be readily implemented as software executed on a programmed general purpose computer, a special purpose computer, a microprocessor, or the like. In these instances, the methods and systems of this invention can be implemented as a program embedded on a personal computer such as a Java® or CGI script, as a resource residing on a server or graphics workstation, as a routine embedded in a dedicated electronic message management system, a web browser, an electronic message enabled cellular phone, a PDA, a dedicated forum monitoring device, a dedicated electronic message management system, and a dedicated electronic message management system, or the like. The forum monitoring device 100, the electronic message management system 101, and the electronic message management system 102 each can also be implemented by physically incorporating the systems and methods into a software and/or hardware system, such as the hardware and software systems of a dedicated forum monitoring device, a dedicated electronic message management system, and a dedicated electronic message management system.

## Claims

1. An information stream monitoring system comprising:
an information monitoring device that monitors one or more electronic documents in an information stream, and compares information about the one or more electronic documents to at least one rule; and
**characterized by**
a forum spawning device that queries a set of users related to the electronic documents when at least one of the at least one rule is satisfied, and creates a forum based on one or more replies from the queried set of users.

2. The system according to claim 1 wherein
the information monitoring device is adapted to monitor data associated with said electronic documents and compare the data from the electronic documents according to said at least one rule.

3. An information stream monitoring method comprising:
monitoring one or more electronic documents in an information stream;
comparing information about the one or more electronic documents to at least one rule
**characterized by**
querying a set of users related to the electronic documents when at least one of the at least one rule is satisfied; and
creating a new forum based on one or more replies from the queried set of users.

4. A computer readable medium for information storage comprising a set of instructions, that, when executed by a computer, cause the computer to
monitor one or more electronic documents in an information stream;
compare information about the one or more electronic documents to at least one rule
query a set of users related to the electronic documents when at least one of the at least one rule is satisfied; and
to create a new forum based on replies from the queried set of users.

## Patentansprüche

1. System zum Überwachen eines Informationsstroms, das umfasst:
eine Informations-Überwachungsvorrichtung, die ein oder mehrere elektronische/s Dokument/e in einem Informationsstrom überwacht und Informationen über das eine oder die mehreren elektron ische/n Dokument/e mit wenigstens einer Regel vergleicht; und
**gekennzeichnet durch**
eine Forum-Erzeugungsvorrichtung, die eine Gruppe von Benutzern abfragt, die sich auf die elektronischen Dokumente beziehen, wenn wenigstens eine von der wenigstens einen Regel erfüllt ist, und ein Forum auf Basis einer oder mehrerer Antworten von der abgefragten Gruppe von Benutzern schafft.

2. System nach Anspruch 1, wobei
die Informations-Überwachungsvorrichtung so eingerichtet ist, dass sie mit den elektronischen Dokumenten verknüpfte Daten überwacht und die Daten aus den elektronischen Dokumenten gemäß der wenigstens einen Regel vergleicht.

3. Verfahren zum Überwachen eines Informationsstroms, das umfasst:
Überwachen eines oder mehrerer elektronischen/elektronischer Dokumente/s in einem Informationsstrom;
Vergleichen von Informationen über das eine oder die mehreren elektronische/n Dokument/e mit wenigstens einer Regel,
**gekennzeichnet durch**:
Abfragen einer Gruppe von Benutzern, die sich auf die elektronischen Dokumente beziehen, wenn wenigstens eine von der wenigstens einen Regel erfüllt ist; und
Schaffen eines neuen Forums auf Basis einer oder mehrerer Antworten von der abgefragten Gruppe von Benutzern.

4. Computerlesbares Medium zum Speichern von Informationen, das eine Gruppe von Befehlen umfasst, die, wenn sie von einem Computer ausgeführt werden, den Computer veranlassen
ein oder mehrere elektronische/s Dokument/e in einem Informationsstrom zu überwachen;
Informationen über das eine oder die mehreren elektronische/n Dokument/e mit wenigstens einer Regel zu vergleichen,
eine Gruppe von Benutzern, die sich auf die elektronischen Dokumente beziehen, abzufragen, wenn wenigstens eine von der wenigstens einen Regel erfüllt ist; und
ein neues Forum auf Basis von Antworten von der abgefragten Gruppe von Benutzern zu schaffen.

## Revendications

1. Système de surveillance de flux d'informations comprenant:
un dispositif de surveillance d'informations qui surveille un ou plusieurs documents électroniques dans un flux d'informations, et compare une information concernant le ou les plusieurs documents électroniques à au moins une règle; et
**caractérisé par**
un dispositif de génération de forums de discussion qui interroge un ensemble d'utilisateurs se rapportant aux documents électroniques lorsqu'au moins l'une de la au moins une règle est satisfaite, et crée un forum de discussion sur la base d'une ou de plusieurs réponses de l'ensemble d'utilisateurs interrogés.

2. Système selon la revendication 1 dans lequel
le dispositif de surveillance d'informations est adapté pour surveiller des données associées auxdits documents électroniques et comparer les données des documents électroniques selon ladite au moins une règle.

3. Procédé de surveillance de flux d'informations comprenant:
surveiller un ou plusieurs documents électroniques dans un flux d'informations;
comparer une information concernant le ou les plusieurs documents électroniques à au moins une règle;
**caractérisé par**
interroger un ensemble d'utilisateurs se rapportant aux documents électroniques lorsqu'au moins l'une de la au moins une règle est satisfaite; et
créer un nouveau forum de discussion sur la base d'une ou de plusieurs réponses de l'ensemble d'utilisateurs interrogés.

4. Support lisible par ordinateur pour un stockage d'informations comprenant un ensemble d'instructions, qui, lorsqu'elles sont exécutées par un ordinateur, amènent l'ordinateur à
surveiller un ou plusieurs documents électroniques dans un flux d'informations;
comparer une information concernant le ou les plusieurs documents électroniques à au moins une règle;
interroger un ensemble d'utilisateurs se rapportant aux documents électroniques lorsqu'au moins l'une de la au moins une règle est satisfaite; et
créer un nouveau forum de discussion sur la base de réponses de l'ensemble d'utilisateurs interrogés.
